# EUROPEAN PATENT APPLICATION

(11) **EP 3 413 516 A1**
(43) Date of publication of application: **12.12.2018**
(21) Application number: 17747321.2
(22) Date of filing: 27.01.2017
(51) Int. Cl.: H04L 12/28, F24F 11/02, H04Q 9/00, H04W 52/18

(54) **CONTROL SYSTEM, COMMUNICATION METHOD, COMMUNICATION DEVICE, AND TERMINAL DEVICE**

(30) Priority: 01.02.2016 JP 2016017313
(71) Applicant: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: TASHIRO Taichi, Tokyo 105-8001 (JP); INAMURA Hiroyuki, Tokyo 105-8001 (JP); BABA Kenji, Tokyo 105-8001 (JP); SHIMADATE Atsushi, Tokyo 105-8001 (JP)
(74) Representative: Moreland, David
(86) International application number: PCT/JP2017/002928
(87) International publication number: WO 2017/135164

(57) **Abstract**

A control system of an embodiment includes a plurality of communication devices capable of wirelessly communicating with each other via a plurality of communication paths, and a terminal device wirelessly communicating with the plurality of communication devices. The communication device includes a communication unit and a relay unit. The communication unit transmits and receives a packet by wireless communication with the terminal device and other communication device. The relay unit relays the packet received via the communication unit to the other communication device on the basis of a predetermined condition. The terminal device includes a terminal communication unit. The terminal communication unit transmits and receives the packet by the wireless communication with the plurality of communication devices. The terminal communication unit transmits the packet so that the packet is directly received by at least one communication device among the plurality of communication devices.

## Description

### [Technical Field]

Embodiments of the present invention relate to a control system, a communication method, a communication device, and a terminal device.

### [Background Art]

In construction or renovation of office buildings, hotels, factories, commercial facilities, and the like, shortening of the construction period and a high degree of freedom (flexibility for adding or removing facilities) after completion are required. In addition, in environment management inside such buildings, it is necessary to collect information from a device such as a lighting device, an air conditioning device, a heat source device, and various sensors disposed on an ceiling back (and above the ceiling back) in addition to various sensors for measuring a temperature, humidity, illuminance, or the like in a office room, or various setting devices for a device such as a lighting device or an air conditioning device. In addition, in a device control system for realizing device control thereof, a network enabling communication of information necessary for the control (hereinafter referred to as "device control network") is indispensable.

Since such a device control system is required to have high reliability, prior device control networks have generally been configured with wires. However, especially in a case in which many devices and sensors are present in the device control system, communication wires connecting such devices and sensors are complicated and much labor is required for wiring work in constructing or renovating the building. In such circumstances, a wireless device control network is desired. However, in a case in which a device control network is wirelessly configured, reliability of the communication may be reduced.

### [Citation List]

### [Patent Literature]

[Patent Literature 1]
   Japanese Unexamined Patent Application, First Publication No. H11-44447
[Patent Literature 2]
   Japanese Unexamined Patent Application, First Publication No. 2003-83591

### [Summary of Invention]

### [Problem to be Solved by the Invention]

A problem to be solved by the present invention is to provide a control system, a communication method, a communication device, and a terminal device capable of wirelessly configuring a device control network while securing higher reliability.

### [Means to Solve the Problem]

A control system of an embodiment includes a plurality of communication devices capable of wirelessly communicating with each other via a plurality of communication paths, and a terminal device wirelessly communicating with the plurality of communication devices. The communication device includes a communication unit and a relay unit. The communication unit transmits and receives a packet by wireless communication with the terminal device and other communication device. The relay unit relays the packet received via the communication unit to the other communication device on the basis of a predetermined condition. The terminal device includes a terminal communication unit. The terminal communication unit transmits and receives the packet by the wireless communication with the plurality of communication devices. The terminal communication unit transmits the packet so that the packet is directly received by at least one communication device among the plurality of communication devices.

### [Brief Description of Drawings]

Fig. 1 is a diagram schematically illustrating a device control system according to a first embodiment.
Fig. 2 is a diagram schematically illustrating a network configuration of an air conditioning control system 100.
Fig. 3 is a block diagram illustrating a specific example of a functional configuration of a controller 1 according to the first embodiment.
Fig. 4 is a diagram illustrating a specific example of group information.
Fig. 5 is a block diagram illustrating a specific example of a functional configuration of a terminal device 2 according to the first embodiment.
Fig. 6 is a diagram illustrating an operation example of uplink communication in the air conditioning control system 100 according to the first embodiment.
Fig. 7A is a diagram illustrating a specific example of a communication packet in the uplink communication.
Fig. 7B is a diagram illustrating a specific example of the communication packet in the uplink communication.
Fig. 8 is a diagram illustrating an operation example of downlink communication in the air conditioning control system 100 according to the first embodiment.
Fig. 9A is a diagram illustrating a specific example of the communication packet in the downlink communication.
Fig. 9B is a diagram illustrating a specific example of the communication packet in the downlink communication.
Fig. 9C is a diagram illustrating a specific example of the communication packet in the downlink communication.
Fig. 9D is a diagram illustrating a specific example of the communication packet in the downlink communication.
Fig. 10 is a diagram illustrating a specific example of a functional configuration of a controller 1a according to a modification example.
Fig. 11 is a diagram illustrating a specific example of a functional configuration of a controller 1b according to a second embodiment.
Fig. 12 is a diagram illustrating a specific example of a functional configuration of a terminal device 2b according to the second embodiment.
Fig. 13 is a diagram illustrating an operation example of uplink communication in the air conditioning control system 100 according to the second embodiment.
Fig. 14 is a diagram illustrating a specific example of a hardware configuration of a communication device 3 according to a third embodiment.
Fig. 15 is a diagram illustrating a specific example of a functional configuration of a controller 1c according to a fourth embodiment.
Fig. 16 is a diagram schematically illustrating a configuration of the air conditioning control system 100 according to the fourth embodiment.

### [Description of Embodiments]

Hereinafter, a control system, a communication method, a communication device, and a terminal device of an embodiment will be described with reference to the drawings.

### [First embodiment]

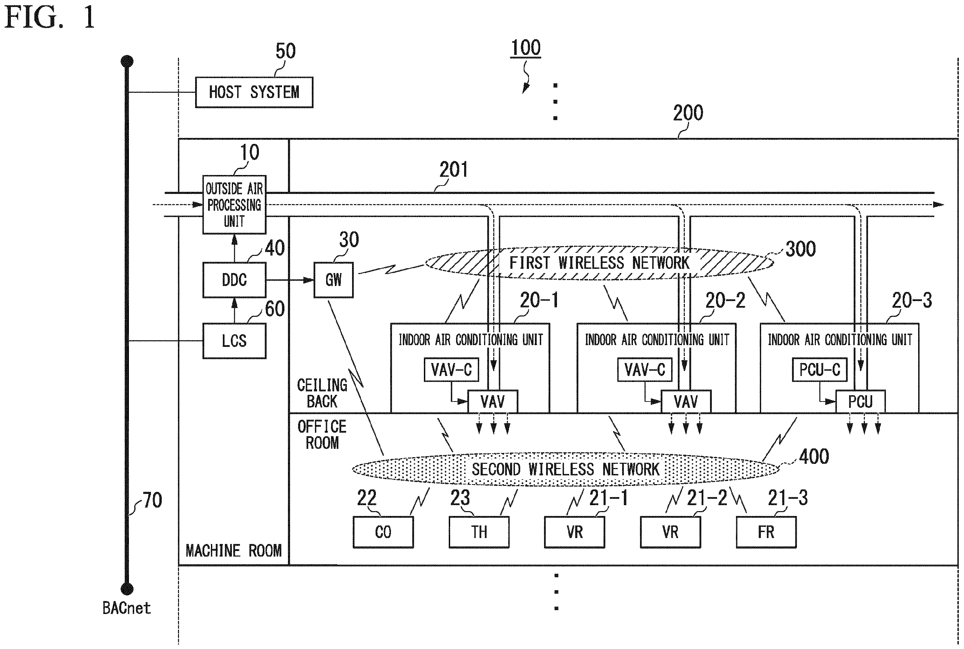

Fig. 1 is a diagram schematically illustrating a device control system according to a first embodiment. Fig. 1 illustrates an air conditioning control system 100 as an example of the device control system according to the first embodiment. The air conditioning control system 100 is a device control system that controls air conditioning in a building. The air conditioning control system 100 includes an outside air processing unit 10 and an indoor air conditioning unit 20. In general, the outside air processing unit 10 is referred to as an air handling unit (AHU) and is a facility that draws air from outside the building into the building. A broken line arrow of Fig. 1 indicates a direction in which the air drawn by the outside air processing unit 10 flows, and the outside air processing unit 10 sends the air from the outside to each office room in the building through a duct 201 installed in the building.

The indoor air conditioning unit 20 is a facility that supplies the air drawn into the building by the outside air processing unit 10 to each office room in the building. The indoor air conditioning unit 20 includes a blower such as a variable air volume (VAV) or a fan coil unit (FCU), and supplies the air drawn into the building by the outside air processing unit 10 to the inside of the office room from an ceiling back. The indoor air conditioning unit 20 includes a controller that controls these blowers, and controls an air volume to be supplied into the inside of the office room by the control of the controller. A VAV-C of Fig. 1 is a controller of the VAV, and an FCU-C is a controller of the FCU. The indoor air conditioning unit 20 acquires information necessary for controlling the blower from a remote controller, various sensors, and the like in the office room.

For example, VR21-1 to VR21-3 are remote controllers corresponding to the indoor air conditioning units 20-1 to 20-3, respectively. VR21 transmits setting information input by the user to the indoor air conditioning unit 20 by wireless communication. In addition, a CO22 is a CO₂ sensor, and a TH23 is a temperature sensor. CO22 measures the concentration of CO₂ in the office room, and TH23 measures a temperature in the office room. CO22 and TH23 transmit measurement information to a direct digital controller (DDC) 40 via wireless communication with a gateway device 30. Here, the DDC 40 is a device that controls the outside air processing unit 10. The DDC 40 controls the outside air processing unit 10 on the basis of the measurement information transmitted from CO22 or TH23.

The air conditioning control in the building largely is divided into individual control performed for each air conditioning area 200 in the building and overall control performed for the entire building. The individual control is control performed only in a device configuring each air conditioning area 200. For example, the individual control is the control of the indoor air conditioning unit 20 based on the setting information acquired by VR21, the control of the outside air processing unit 10 based on the measurement information acquired by CO22 or TH23, or the like, and all control is realized by communication in the air conditioning area 200. In addition, in the building, the air conditioning area 200 may be provided in any way. For example, the air conditioning area 200 may be provided for each floor of the building or may be provided for each office room on each floor.

On the other hand, the overall control is control based on control information transmitted from a host system 50. For example, the overall control is control to stop or start the air conditioning of the entire building at once, control to determine a target value of the air conditioning with respect to each air conditioning area 200, or the like. For the overall control, a local control server (LCS) 60 is installed in each air conditioning area 200. The LCS 60 is connected to a wired control network 70 connecting each air conditioning area 200 in the building and communicates with the host system 50 via the control network 70. For example, the LCS 60 acquires the measurement information from a sensor such as CO22, TH23, or the like and transmits the measurement information to the host system 50 through the gate device 30. The host system 50 generates control information for setting the target value of the air conditioning with respect to each air conditioning area 200 on the basis of the measurement information collected from each air conditioning area 200. The host system 50 transmits the generated control information to the LCS 60 of each air conditioning area 200 of a control target. The LCS 60 of each air conditioning area controls each device of the air conditioning area 200 to which the LCS 60 belongs so that the target value indicated by the control information transmitted from the host system 50 is realized.

The air conditioning control system 100 of the present embodiment includes a first wireless network 300 and a second wireless network 400 as device control networks of each air conditioning area 200 that realizes such air conditioning control. The first wireless network 300 is a wireless network for realizing communication between devices capable of stably receiving power in the air conditioning area 200. For example, the first wireless network 300 realizes communication between devices such as the indoor air conditioning unit 20 installed in the ceiling back and the gateway device 30. On the other hand, the second wireless network 400 is a wireless network for realizing communication between a device having limited power which may be consumed in the air conditioning area 200 and a device connected to the first wireless network 300. For example, the second wireless network 400 is installed in the office room and realizes communication with a remote controller, a sensor, or the like that operates with a limited power source such as a battery.

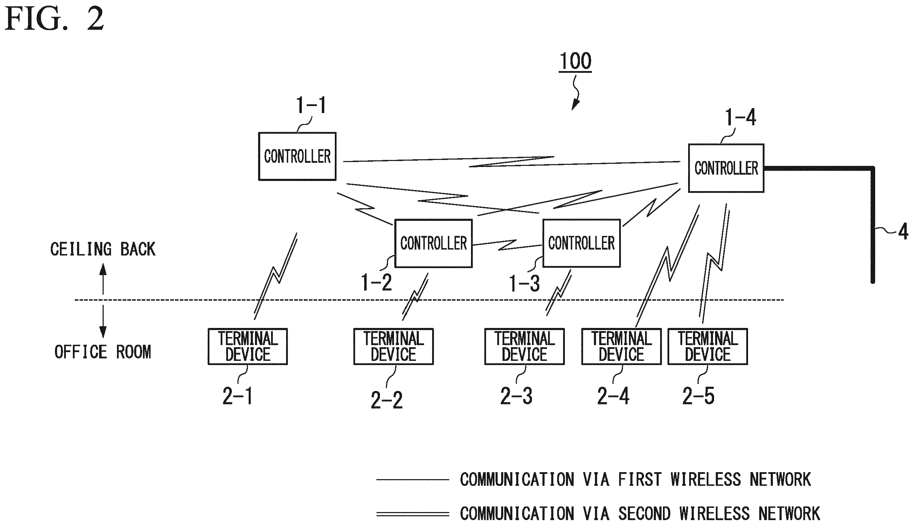

Fig. 2 is a diagram schematically illustrating a network configuration of the air conditioning control system 100. In addition, in Fig. 2, in order to simplify the description, a device configuring the first wireless network 300 will be described as a controller 1 and a device that communicates with the controller 1 via the second wireless network 400 will be described as a terminal device 2. Specifically, controllers 1-1 to 1-3 of Fig. 2 correspond to each indoor air conditioning unit 20 of Fig. 1 and terminal devices 2-1 to 2-5 of Fig. 2 correspond to each remote controller, sensor, or the like of Fig. 1. In addition, a controller 1-4 of Fig. 2 corresponds to the gateway device 30 of Fig. 1 and is connected to a wired network 4 corresponding to the control network 70.

The first wireless network 300 of the air conditioning control system 100 is configured as a wireless mesh network. The mesh network is a communication network formed in a mesh shape by mutual communication between terminals having a communication function. In particular, a mesh network formed by terminals having a wireless communication function is referred to as a wireless mesh network. In the mesh network, a node configuring a network mutually communicates with one or more other nodes, so that a transmission packet is transmitted to a destination node in a bucket relay method. A transmission path (communication path) of the transmission packet is dynamically determined according to a state of a network by a protocol of the mesh network. Therefore, even if one node is unable to perform communication, the wireless mesh network may transmit the transmission packet to the destination node via the transmission path by other node capable of performing communication. As described above, the wireless mesh network has high fault tolerance. In the air conditioning control system 100 according to the embodiment, since the first wireless network 300 is configured as such a wireless mesh network, it is possible to realize high reliability regarding the communication between the controllers 1.

While high reliability may be realized as described above, a dynamic communication control process according to the state of the network is necessary in each node configuring the first wireless network 300. Therefore, the node configuring the first wireless network 300 is required to always be in a state in which communication is able to be performed. In addition, since the above-described communication control process is a process with a relatively high load, for a long operation, it is necessary to supply stable power. Therefore, the first wireless network 300 is suitable for a communication network of the controller 1 which stably receives the power supply and requires high reliability, however, the first wireless network 300 is not suitable for a communication network of the terminal device 2 that is installed in each office room, such as a remote controller or a sensor operated on a limited power source such as a battery. Therefore, in the air conditioning control system 100 according to the present embodiment, the communication network between the terminal device 2 and the controller 1 is configured as a tree shape wireless network that does not require a high load communication control process.

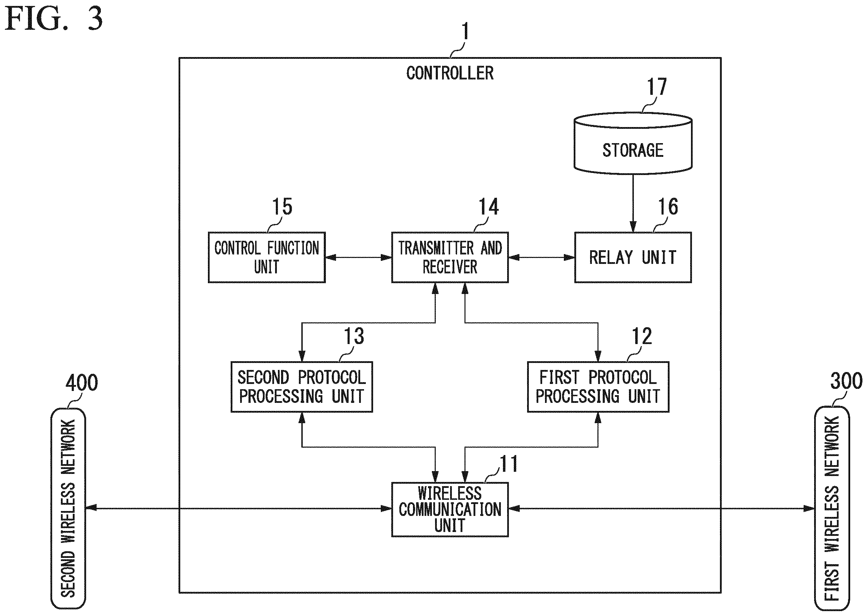

Fig. 3 is a block diagram illustrating a specific example of a functional configuration of the controller 1 according to the first embodiment. The controller 1 includes a central processing unit (CPU), a memory, an auxiliary storage device, or the like connected by a bus, and executes a controller program. The controller 1 functions as a device including a wireless communication unit 11, a first protocol processing unit 12, a second protocol processing unit 13, a transmitter and receiver 14, a control function unit 15, a relay unit 16, and a storage 17, by executing the controller program. In addition, all or a part of each function of the controller 1 may be realized using hardware such as an application specific integrated circuit (ASIC), a programmable logic device (PLD), or a field programmable gate array (FPGA). The controller program may be recorded in a computer-readable recording medium. The computer-readable recording medium is, for example, a portable medium such as a flexible disk, a magneto-optical disc, a ROM, or a CD-ROM, or a storage device such as a hard disk built in a computer system. The controller program may be transmitted via an electric communication line.

The wireless communication unit 11 is a wireless communication interface for the controller 1 to communicate with other controller 1 or the terminal device 2 configuring the first wireless network 300 and the second wireless network 400. The wireless communication unit 11 performs communication in the first wireless network 300 and communication in the second wireless network 400 using the same wireless frequency band. The wireless communication unit 11 outputs a reception packet on the side of the first wireless network 300 to the first protocol processing unit 12 and outputs a reception packet on the side of the second wireless network 400 to the second protocol processing unit 13. In addition, the wireless communication unit 11 converts a transmission packet output from the first protocol processing unit 12 and the second protocol processing unit 13 into radio waves and outputs the radio waves.

In addition, the wireless communication unit 11 may include a determination unit (not shown) that determines whether a protocol of the reception packet corresponds to a protocol of the first protocol processing unit 12 or a protocol of the second protocol processing unit 13 from a header or the like of the packet, and may output the reception packet only to a protocol process unit according to a determination result of the determination unit. In addition, the wireless communication unit 11 may output all reception packets to both the first protocol processing unit 12 and the second protocol processing unit 13. In this case, the controller 1 may be configured so that selection of the reception packet is performed on the side of the first protocol processing unit 12 and the second protocol processing unit 13.

The first protocol processing unit 12 performs a communication process based on a communication protocol on the side of the first wireless network 300 (hereinafter, referred to as "protocol process"). Specifically, the first protocol processing unit 12 performs a protocol process based on the communication protocol of the wireless mesh network (hereinafter, referred to as "wireless mesh protocol"). For example, the wireless mesh protocol has a function of configuring a mesh network with a plurality of nodes (hereinafter referred to as "mesh configuration function"), a function of transmitting reception data to a destination node via a path determined according to a destination of the reception data (hereinafter referred to as "mesh transmission function"), or the like. The first protocol processing unit 12 executes a protocol process for realizing the mesh configuration function or the mesh transmission function. Hereinafter, the protocol process performed by the first protocol processing unit 12 will be described as a first protocol process.

In addition, the destination mentioned here means a node that is an end point in a transmission path of data. On the other hand, hereinafter, a node that is a start point in the transmission path of the data will be described as a source. For example, in Fig. 2, in a case in which the data transmitted from the terminal device 2-1 is first received by the controller 1-1 and finally transmitted to the controller 1-3, the terminal device 2-1 is the source and the controller 1-3 is the destination.

The second protocol processing unit 13 performs a communication process based on a communication protocol on the side of the second wireless network 400. Hereinafter, the protocol process performed by the second protocol processing unit 13 will be described as a second protocol process.

The transmitter and receiver 14 performs input and output of the transmission and reception data between the first protocol processing unit 12 and the second protocol processing unit 13, and between the control function unit 15 and the relay unit 16. Specifically, the transmitter and receiver 14 acquires the reception data transmitted to its own device from each protocol process unit, outputs the reception data to the control function unit 15 and the relay unit 16, and outputs the transmission data output from the control function unit 15 and the relay unit 16 to the protocol process unit according to the communication protocol of the transmission destination.

The control function unit 15 is a functional unit that realizes a control function as a controller. For example, in the controller 1 functioning as the indoor air conditioning unit 20, the control function unit 15 functions as the VAV-C or the FCU-C that executes a process such as control of the air volume (hereinafter referred to as "control process") as a control target of the VAV, the FCU, or the like. The control function unit 15 transmits and receives information necessary for executing the control process between the control function unit 15 and other device via the transmitter and receiver 14.

The relay unit 16 performs a relay process of relaying the data received from the terminal device 2 to the other controller 1. Specifically, the relay unit 16 performs the relay process on the basis of group information indicating a correspondence relationship between the terminal device 2 and the controller 1.

A storage 17 is configured using a storage device such as a magnetic hard disk device or a semiconductor storage device. The storage 17 stores the group information in advance.

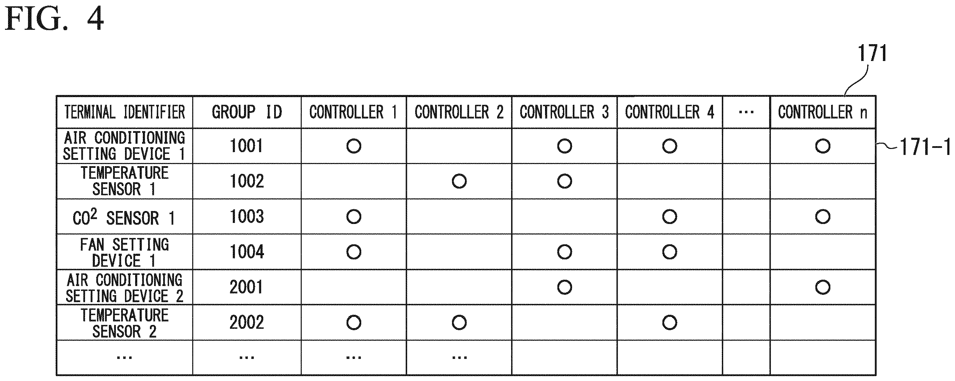

Fig. 4 is a diagram illustrating a specific example of the group information. For example, the group information is stored in the storage 17 as a group information table 171 shown in Fig. 4. The group information table 171 has a group information record for each group ID. The group information record has each item of a terminal device ID, a group ID, and correspondence information. The terminal device ID is identification information of the terminal device 2. The group ID is identification information of a group (hereinafter referred to as "control group") of the controller 1 corresponding to each terminal device 2. The correspondence information is information indicating the controller 1 corresponding to each control group. In the example of Fig. 4, the correspondence information has a small item for each controller 1 indicating presence or absence of a correspondence by "○." For example, the group information record 171-1 shows that a "controller_1," a "controller_3, a "controller_4," and a "controller_n" are included in a control group identified by a group ID of "1001."

In this case, for example, in a case in which a source of the reception data is an "air conditioning setting device_1," the relay unit 16 transmits the transmission data to the "controller_1," the "controller_3," the "controller_4," and the "controller_n" belonging to a group (group ID "1001") corresponding to the "air conditioning setting device_1."

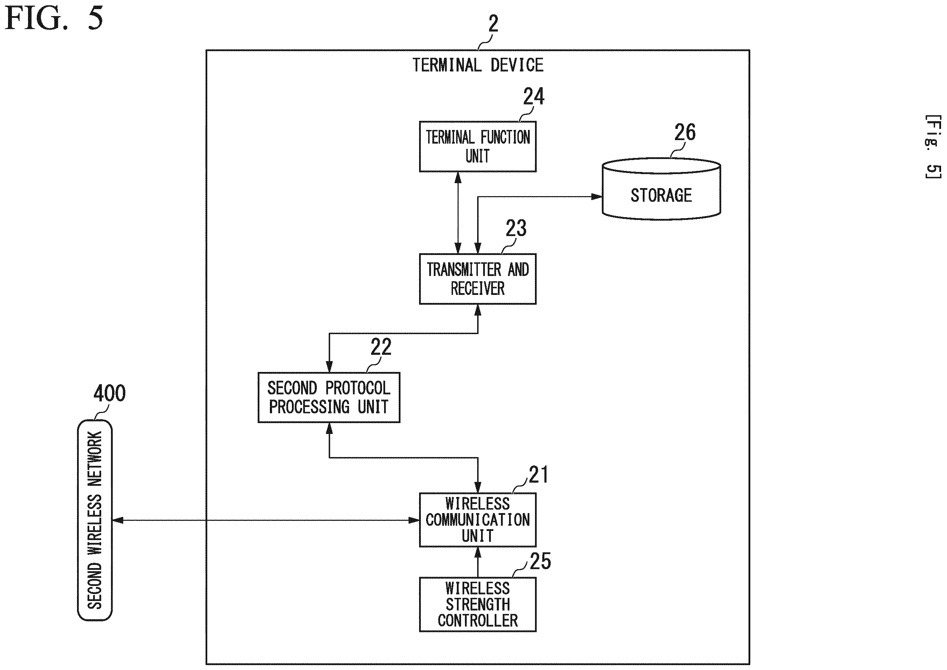

Fig. 5 is a block diagram illustrating a specific example of a functional configuration of the terminal device 2 according to the first embodiment. The terminal device 2 includes a CPU, a memory, an auxiliary storage device, or the like connected by a bus, and executes a terminal device program. The terminal device 2 functions as a device including a wireless communication unit 21 (terminal communication unit), a second protocol processing unit 22, a transmitter and receiver 23, a terminal function unit 24, a wireless controller 25, and a storage 26 by executing the terminal device program. In addition, all or a part of each function of the terminal device 2 may be realized using hardware such as an ASIC, a PLD, or an FPGA. The terminal device program may be recorded in a computer-readable recording medium. The computer-readable recording medium is, for example, a portable medium such as a flexible disk, a magneto-optical disc, a ROM, or a CD-ROM, or a storage device such as a hard disk built in a computer system. The terminal device program may be transmitted via an electric communication line.

The wireless communication unit 21 is a wireless communication interface for the terminal device 2 to communicate with the controller 1 via the second wireless network 400. The wireless communication unit 21 performs communication in the second wireless network 400 using the same wireless frequency band as the wireless communication unit 11 of the controller 1. The wireless communication unit 21 outputs a reception packet to the second protocol processing unit 22, converts a transmission packet output from the second protocol processing unit 22 into radio waves and outputs the radio waves.

Since the second protocol processing unit 22 is similar to the second protocol processing unit 13 of the controller 1, description thereof is omitted.

The transmitter and receiver 23 performs an input and an output of the transmission and reception data between the second protocol processing unit 22 and the terminal function unit 24. Specifically, the transmitter and receiver 23 acquires the reception data transmitted to its own device from the second protocol processing unit 22, outputs the reception data to the terminal function unit 24, and outputs the transmission data output from the terminal function unit 24 to the second protocol processing unit 22.

The terminal function unit 24 is a function unit that realizes a function as a terminal device. For example, in the terminal device 2 functioning as the remote controller device of the indoor air conditioning unit 20, the terminal function unit 24 executes a process of receiving an input of setting information by the user, a process of transmitting the input setting information to the corresponding indoor air conditioning unit 20, a process of displaying information notified from the indoor air conditioning unit 20, or the like. Hereinafter, the process performed to realize a function as such a terminal device is referred to as a terminal process. The terminal function unit 24 transmits and receives information related to the terminal process between the terminal function unit 24 and the controller 1 via the transmitter and receiver 23.

The wireless controller 25 controls an operation of the wireless communication unit 21. Specifically, the wireless controller 25 suppresses power consumption by intermittently operating the wireless communication unit 21. For example, the wireless controller 25 may suppress the power consumption of the wireless communication unit 21 by causing the operation of the wireless communication unit 21 to be in a sleep state at a predetermined timing. The timing at which the operation of the wireless communication unit 21 is in the sleep state may be periodic or not periodic. In addition, the length of the period during which the operation of the wireless communication unit 21 is in the sleep state may be a fixed value or may be changed according to a communication situation.

The storage 26 is configured using a storage device such as a magnetic hard disk device or a semiconductor storage device. The storage 26 stores various pieces of information necessary for the operation of the terminal device 2.

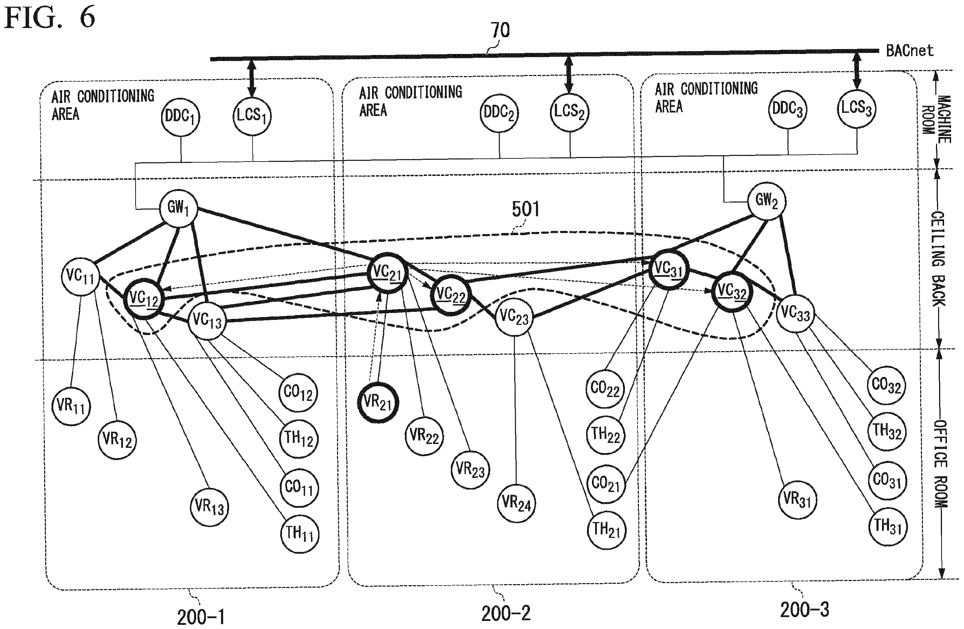

Fig. 6 is a diagram illustrating an operation example of uplink communication in the air conditioning control system 100 according to the first embodiment. The air conditioning control system 100 in the example of Fig. 6 includes two gateway devices 30 (GW₁ and GW₂) with respect to three air conditioning areas 200-1 to 200-3. In addition, the uplink communication mentioned here means communication of the direction from the terminal device 2 in the office room to the controller 1 of the ceiling back. In addition, the controller 1 (hereinafter referred to as "corresponding device") to be communicated with is set in advance in each terminal device 2. In Fig. 6, a line connecting each terminal device 2 and each controller 1 indicates a correspondence relationship between each terminal device 2 and the corresponding device. In addition, a broken line indicated by a reference numeral 501 in Fig. 6 indicates a control group indicating the controller 1 corresponding to VR₂₁. Hereinafter, the control group will be described as a control group 501.

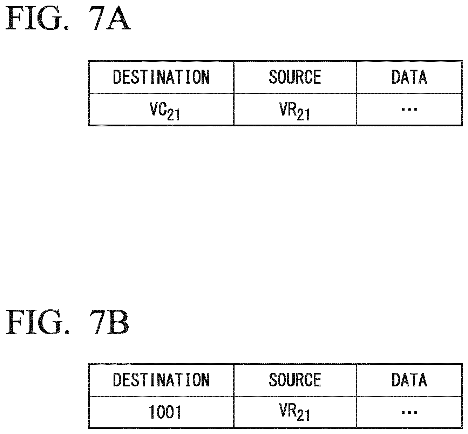

Fig. 7A and Fig. 7B are diagrams illustrating a specific example of a communication packet in the uplink communication. Hereinafter, with reference to Fig. 6, Fig. 7A, and Fig. 7B, a case in which VR₂₁ transmits data to the controller 1 (that is, VC₁₂, VC₂₁, VC₂₂, VC₃₁, and VC₃₂) belonging to the control group 501 will be described as an example of a flow of the uplink communication. In this case, the transmitter and receiver 23 of VR₂₁ first transmits the data to VC₂₁ that is a corresponding device as a destination. Here, the transmitted packet is, for example, as shown in Fig. 7A. The transmitter and receiver 14 of VC₂₁ acquires the reception packet transmitted to its own device from the second protocol processing unit 13 and outputs the data included in the reception packet to the control function unit 15.

On the other hand, the transmitter and receiver 14 of VC₂₁ outputs the acquired reception packet transmitted to its own device to the relay unit 16. The relay unit 16 refers to the group information and identifies the control group 501 corresponding to VR₂₁ that is the source of the reception packet. The relay unit 16 generates a transmission packet in which a group ID (for example, it is assumed to be "1001" here) indicating the control group 501 is set as the destination of the reception packet. The transmission packet generated here is, for example, as shown in Fig. 7B. VC₂₁ transmits the transmission packet generated by the relay unit 16 to the side of the first wireless network 300. The transmission packet transmitted to the side of the first wireless network 300 is transmitted to the other controller 1 belonging to the control group 501 by the wireless mesh network. In addition, a process of converting the group ID into address information of each controller 1 that is a destination may be performed by the transmitter and receiver 14 or may be performed by the first protocol processing unit 12. In addition, VR₂₁ may directly transmit the data to the control group as the destination in the format of Fig. 7B.

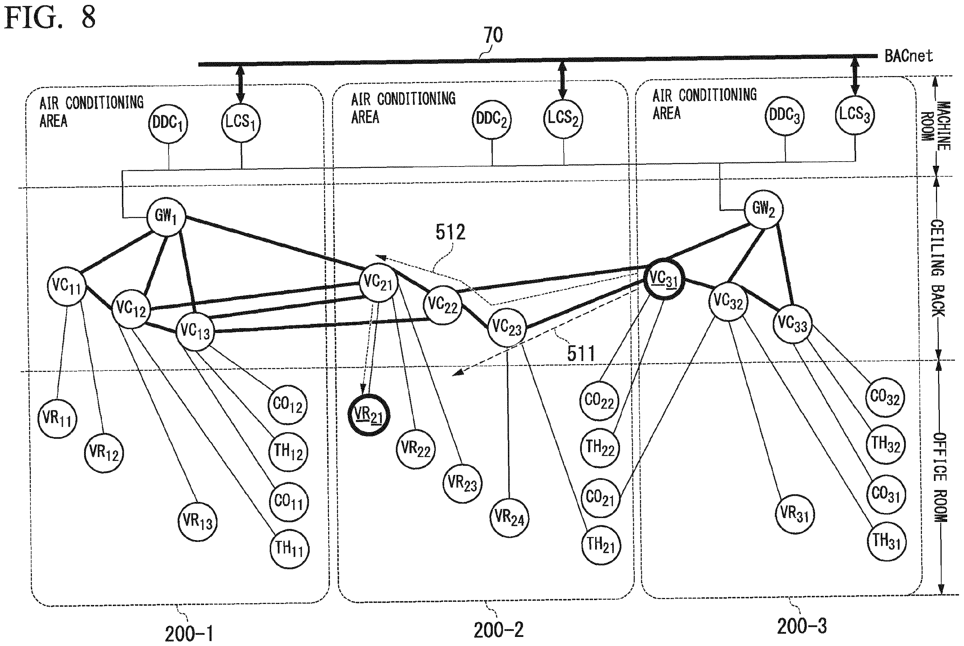

Fig. 8 is a diagram illustrating an operation example of downlink communication in the air conditioning control system 100 according to the first embodiment. The configuration of the air conditioning control system 100 in the example of Fig. 8 is the same as Fig. 6. In addition, the downlink communication mentioned here means communication of the direction from the controller 1 of the ceiling back to the terminal device 2 in the office room.

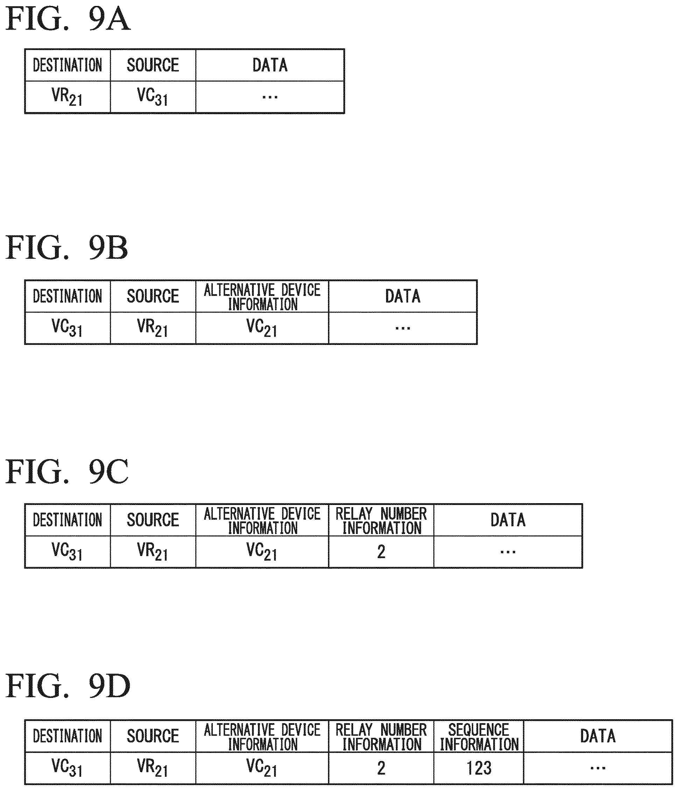

Fig. 9A, Fig. 9B, Fig. 9C, and Fig. 9D are diagrams illustrating a specific example of a communication packet in the downlink communication. Hereinafter, with reference to Fig. 8, Fig. 9A, Fig. 9B, Fig. 9C, and Fig. 9D, a case in which VC₃₁ transmits data to VR₂₁ will be described as an example of a flow of the downlink communication. In this case, first, the transmitter and receiver 14 of VC₃₁ determines whether or not it is possible to directly transmit (hereinafter referred to as "direct transmission") the packet to VR₂₁ that is the destination. For example, the determination is performed by the transmitter and receiver 14. For example, the transmitter and receiver 14 actually transmits the packet (arrow 511 in the figure) and determines whether or not the direct transmission is possible according to whether or not a reception response (for example, ACK) of the packet is obtained from the destination. The packet transmitted here is, for example, as shown in Fig. 9A. In addition, for example, the transmitter and receiver 14 may determine whether or not the direct transmission is possible on the basis of a received signal strength indicator (RSSI) of VR₂₁ that is the destination.

Here, in a case in which it is determined that the direct transmission packet is impossible, the transmitter and receiver 14 outputs the transmission packet to the relay unit 16. The relay unit 16 causes the other controller 1 to perform the direct transmission of the packet to VR₂₁ that is the destination instead. Specifically, the relay unit 16 selects a controller 1 that performs the transmission of the packet (hereinafter referred to as "alternative device") instead from the controllers 1 belonging to the first wireless network 300 and transmits the transmission packet to the selected alternative device. For example, VC₃₁ selects VC₂₁ as the alternative device and transmits the transmission packet. For example, the packet transmitted here is transmitted via the path of VC₂₃, VC₂₂, and VC₂₁ by the wireless mesh network (arrow 512 in the figure). In addition, for the alternative device, one controller 1 may be selected or a plurality of controllers 1 may be selected.

Here, the alternative device selected by the relay unit 16 may be determined by any method. For example, the relay unit 16 may select the alternative device on the basis of the group information. In this case, the relay unit 16 refers to the group information and selects the controller 1 belonging to the control group corresponding to the terminal device 2 that is the destination of the transmission packet as the alternative device. Specifically, VC₃₁ identifies that the control group corresponding to VR₂₁ is the control group 501. The relay unit 16 selects one of the controllers 1 (that is, VC₁₂, VC₁₂, VC₂₁, and VC₂₂) other than its own device corresponding to the control group 501 as the alternative device.

In addition, for example, the relay unit 16 may select the controller 1 having high received signal strength as the alternative device on the basis of the RSSI of the other controller 1. In this case, for example, VC₂₂, VC₂₃, VC₃₂, or the like located relatively close to VC₃₁ is selected as the alternative device.

In addition, for example, the relay unit 16 may select the controller 1 directly receiving the corresponding packet from VR₂₁ among the other controllers 1 relaying the packet of the uplink communication transmitted from VR₂₁ to its own device as the alternative device. For example, in this case, in a case in which each controller 1 directly receives the transmission packet of the terminal device 2, each controller 1 includes alternative device information indicating its own device in the corresponding packet and relays the corresponding packet to one of the other controllers 1. For example, in a case in which VC₃₁ receives the transmission packet of VR₂₁ directly received by VC₂₁, the packet received by VC₃₁ is, for example, as shown in Fig. 9B. In this case, the relay unit 16 of VC₃₁ selects VC₂₁ as the alternative device at the time of the data transmission to VR₂₁.

In general, in the air conditioning control system 100, a start point of the data transmission from each controller 1 to each terminal device 2 is the uplink communication of each terminal device 2. In addition, as described above, the transmission packet of the terminal device 2 is relayed by the plurality of controllers 1. Therefore, each controller 1 acquires the alternative device information included in the reception packet relayed by the other controller 1 among the reception packets in the uplink communication that is the start point, and thus it is possible to select the controller 1 that is able to transmit the transmission packet to the terminal device 2 of the destination as the alternative device. In addition, the selection of the alternative device does not necessarily have to be performed on the basis of the uplink communication that is the start point described above, and may be performed on the basis of any uplink communication in the past.

In addition, for example, the relay unit 16 may select all of the controllers 1 belonging to the first wireless network 300 as the alternative device. In this case, the relay unit 16 may broadcast the transmission packet to the inside of the first wireless network 300.

However, in the above-described method of relaying the packet, in a case in which a plurality of alternative devices are selected, the same packet for the same destination is relayed by the plurality of controllers 1. Therefore, in such a method of relaying the packet, the transmission packet amplified by the relay of the plurality of controllers 1 may cause network congestion. Thus, the relay unit 16 of the controller 1 has a function of limiting the number of times the transmission packet is relayed. In addition, the transmitter and receiver 14 of the controller 1 and the transmitter and receiver 23 of the terminal device 2 have a function of removing duplication of the reception packet.

For example, the relay unit 16 determines whether or not to relay the reception packet on the basis of the number of times the reception packet is relayed. In this case, when each controller 1 relays the reception packet, each controller 1 includes relay number information indicating the number of times the reception packet is relayed in the reception packet and relays the reception packet. The reception packet relayed as described above is, for example, as shown in Fig. 9C. The relay unit 16 relays the reception packet to the other controller 1 only in a case in which the value indicated by the relay number information of the reception packet is equal to or less than a predetermined threshold value.

In addition, for example, the transmitter and receiver 14 removes duplication of the reception packet on the basis of a transmission sequence of the reception packets. In this case, in each controller 1 and each terminal device 2, a node that is the start point of the data transmission performs the data transmission by including sequence information indicating the transmission sequence of the packets in the transmission packet. The packet transmitted as described above is, for example, as shown in Fig. 9D. For example, the sequence information is expressed by a numerical value that increases for each data transmission. The transmitter and receiver 14 identifies sameness of the transmission packet by the sameness of the value of the sequence information and removes the duplication of the reception packet by discarding the reception packet of which the value indicated by the sequence information overlaps. The transmitter and receiver 14 may select any one of the duplicated reception packets or may select a reception packet considered as a reception packet having high reliability among the duplicated reception packets, by such a duplication removal method. For example, the transmitter and receiver 14 may select a reception packet having a small number of relays as the reception packet having high reliability or may select a reception packet transmitted from a node having a high RSSI.

In addition, in the control function unit 15 of the controller 1 or the terminal function unit 24 of the terminal device 2, a process sequence of reception data may be important in some cases. In such a case, the transmitter and receiver 14 of the controller 1 and the transmitter and receiver 23 of the terminal device 2 may detect incorrectness of the reception sequence on the basis of the sequence information of the reception packet and output the reception data to the control function unit 15 and the terminal function unit 24 in a correct sequence.

The air conditioning control system 100 according to the first embodiment configured as described above includes the controller 1 that relays the reception data to the other controller 1 on the basis of the group information. Therefore, in the air conditioning control system 100, it is possible to wirelessly configure the device control network while securing higher reliability. In addition, the air conditioning control system 100 includes the terminal device 2 that intermittently performs wireless communication, thereby increasing power saving performance of the terminal device 2 in the air conditioning control system 100.

Hereinafter, a modification example of the air conditioning control system 100 of the first embodiment will be described.

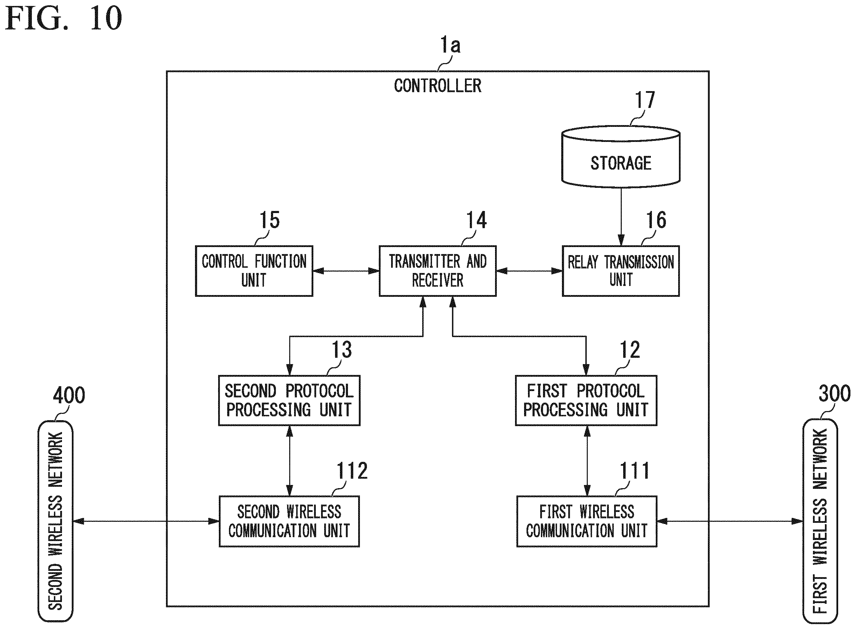

Fig. 10 is a diagram illustrating a specific example of a functional configuration of a controller 1a according to the modification example. The controller 1a is different from the controller 1 of the first embodiment in a point that the controller 1a includes a first wireless communication unit 111 and a second wireless communication unit 112 instead of the wireless communication unit 11.

As described above, the controller 1 may include different wireless communication units for each of the first wireless network 300 and the second wireless network 400.

In addition, although the first wireless network 300 and the second wireless network 400 use wireless communication of the same frequency band in the present embodiment, it is possible to share hardware realizing wireless communication by setting the same frequency band. In addition, it is possible to further improve communication quality by using a sub-giga band (900 MHz to 990 MHz) as the frequency band. In wireless, the sub-giga band has characteristics that it is possible to realize stable (easily looping) communication even in a case in which there is an obstacle between terminals and it is possible to realize a high communication speed.

Therefore, even in the wireless communication (first wireless network 300) between the controllers 1 installed in the ceiling back or the like, the influence of an obstacle such as an air conditioner or various wires installed in the ceiling back is small and it is possible to realize high communication quality. In addition, even in the wireless communication (second wireless network 400) between the controller 1 installed in the ceiling back and the terminal device 2 installed in the office room, the influence of the ceiling back partitioning both sides is small and it is possible to realize high communication quality.

In addition, in a case in which a device that performs wireless communication (Wi-Fi or the like) in the 2.4 GHz band or 5 GHz band is installed in the office room, wireless communication in the 920 MHz band with a different frequency band is used by the first wireless network 300 and the second wireless network 400. Therefore, since there is no interference from the device in the office room, it is possible to realize high communication quality.

In addition, since an available bandwidth is small in a low frequency band below the 900 MHz band, the communication speed is low and a restriction of realizing the mesh network in the first wireless network 300 is large, however, the frequency band of the sub-giga band is used, and thus it is possible to realize high communication quality.

### [Second embodiment]

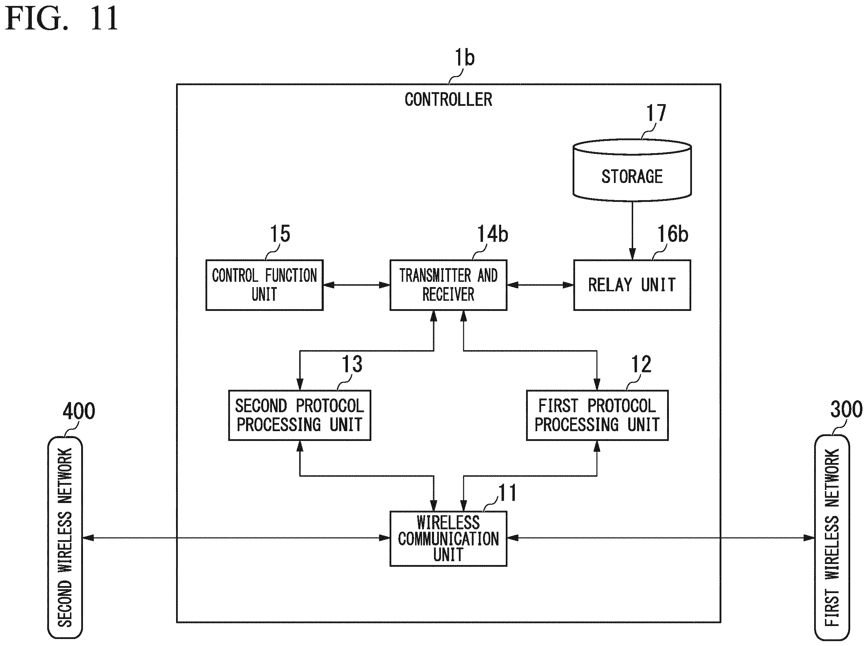

Fig. 11 is a diagram illustrating a specific example of a functional configuration of a controller 1b according to the second embodiment. The controller 1b is different from the controller 1 of the first embodiment in a point that the controller 1b includes a transmitter and receiver 14b instead of the transmitter and receiver 14 and a relay unit 16b instead of the relay unit 16.

The transmitter and receiver 14b performs input and output of the transmission and reception data between the first protocol processing unit 12 and the second protocol processing unit 13, and between the control function unit 15 and the relay unit 16b. Specifically, the transmitter and receiver 14b acquires the reception data transmitted to its own device from each protocol process unit, outputs the reception data to the control function unit 15, and acquires the reception data transmitted to its own device from the second protocol processing unit 13 and outputs the reception data to the relay unit 16b. The transmitter and receiver 14b outputs the transmission data output from the control function unit 15 and the relay unit 16b to the protocol process unit according to the communication protocol of the transmission destination.

The relay unit 16b performs a relay process of relaying the reception data which is received from the terminal device 2 and not transmitted to its own device to the other controller 1.

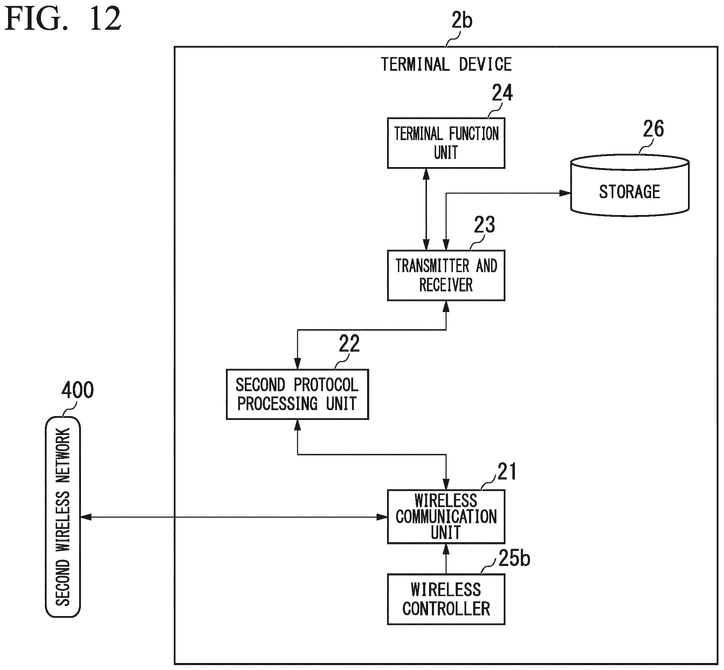

Fig. 12 is a diagram illustrating a specific example of a functional configuration of a terminal device 2b according to the second embodiment. The terminal device 2b is different from the terminal device 2 of the first embodiment in a point that the terminal device 2b includes a wireless controller 25b instead of the wireless controller 25.

The wireless controller 25b controls the operation of the wireless communication unit 21. Specifically, the wireless controller 25b controls the wireless communication unit 21 so that radio waves having the strength with which radio waves output from the wireless communication unit 21 are able to be received by at least two controllers 1 among the plurality of controllers 1 are output. For example, the wireless controller 25b controls the wireless communication unit 21 so that several controllers 1 are selected in descending order of the reception signal strength on the basis of the RSSI of the controller 1 from which the radio waves are detected and radio waves having the strength capable of being received by the selected controllers 1 are output.

In addition, for example, the wireless controller 25b may control the wireless communication unit 21 so that radio waves having a predetermined minimum strength (hereinafter referred to as "setting strength") are output. In this case, the setting strength is set as the strength with which radio waves are able to be received by at least two controllers 1 among the plurality of controllers 1. For example, the setting strength may be set to be a strength with which radio waves are able to be received by two controllers 1 among the plurality of controllers 1, or may be set to be a strength with which radio waves are able to be received by three controllers 1 among the plurality of controllers 1.

In addition, the wireless controller 25b performs control of gradually reducing the wireless strength of the wireless communication unit 21 from the setting strength within a range where the radio waves are received by at least two controllers 1 among the plurality of controllers 1. For example, in a case in which the setting strength is set as the strength capable of being received by three controllers 1 as an initial value, the wireless communication unit 21 may perform control of gradually reducing the wireless strength so that the wireless strength is close to the strength capable of being received by two controllers 1. In addition, the setting strength may be configured to be changed by an input from the outside. The setting of the minimum signal strength may be input from an input device such as a mouse or a keyboard, or may be input by communication via a network.

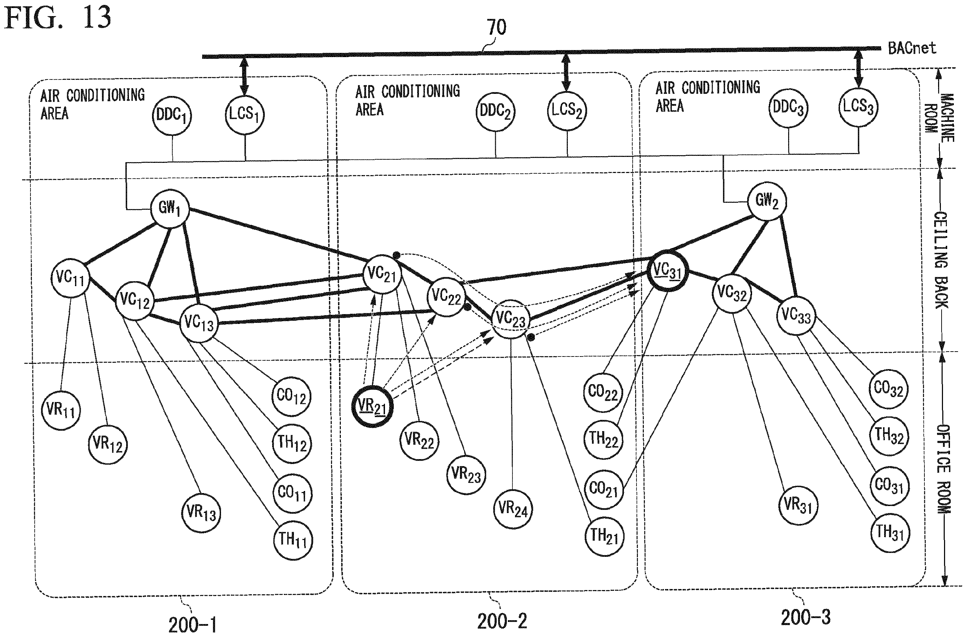

Fig. 13 is a diagram illustrating an operation example of uplink communication in the air conditioning control system 100 according to the second embodiment. Here, a case in which VR₂₁ transmits data to VC₃₁ will be described as an example of a flow of the uplink communication. In this case, the transmitter and receiver 21 of VR₂₁ transmits the transmission packet of which the destination is VC₃₁ in the wireless strength capable of being received by, for example, VC₂₁, VC₂₂, and VC₂₃, by control of the wireless controller 25b. In a case in which the relay units 16b of VC₂₁, VC₂₂, and VC₂₃ identify that the destination of the reception packet is not its own device, the relay units 16b of VC₂₁, VC₂₂, and VC₂₃ relay the reception packets to the other controllers 1. The packets relayed by VC₂₁, VC₂₂, and VC₂₃ are transmitted to VC₃₁ that is the destination by the wireless mesh network.

The air conditioning control system 100 according to the second embodiment configured as described above includes the controller 1 that relays the reception packet that is transmitted from the terminal device 2 and is not transmitted to its own device to the other controller 1. When such a controller 1 is provided, it is possible to wirelessly configure the device control network while securing higher reliability in the air conditioning control system 100. In addition, the air conditioning control system 100 includes the terminal device 2 that transmits the packet by the radio waves having the strength received by at least two controllers 1. When such a terminal device 2 is provided, it is possible to suppress consumption of power related to wireless output of the wireless terminal 2 in a range where it is possible to secure redundancy of the connection between the controller 1 and the terminal device 2 in the air conditioning control system 100.

### [Third embodiment]

In the third embodiment, a communication device 3 that is able to function as the controller 1 or the terminal device 2 of the first embodiment will be described.

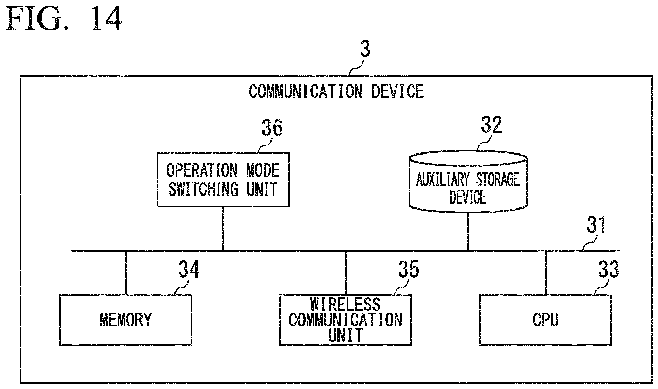

Fig. 14 is a diagram illustrating a specific example of a hardware configuration of the communication device 3 according to the third embodiment.

For example, the communication device 3 includes an auxiliary storage device 32, a CPU 33, a memory 34, a wireless communication unit 35 (wireless output unit), and an operation mode switching unit 36 (operation mode setting unit) connected via a bus 31. The auxiliary storage device 32 stores a controller program and a terminal device program in advance. The CPU 33 reads one of the controller program and the terminal device program from the memory 34, which are stored in the auxiliary storage device 32, and executes the one of the controller program and the terminal device program. The CPU 33 causes the communication device 3 to function as the controller 1 by executing the controller program (first mode) and causes the communication device 3 to function as the terminal device 2 by executing the terminal device program (second mode). The wireless communication unit 35 is a network interface for the wireless communication by the communication device 3. The operation mode switching unit 36 sets the CPU 33 to execute either the controller program or the terminal device program.

For example, the operation mode switching unit 36 may be configured as hardware such as a dip switch or may be configured as a program to be executed at the time of starting the communication device 3.

In a case in which the operation mode switching unit 36 is configured as the program, the operation mode switching unit 36 may select either the controller program or the terminal device program on the basis of an input by the user in an interactive format or may select either the controller program or the terminal device program on the basis of a setting file read at the time of starting. The operation mode switching unit 36 notifies the CPU 33 of a selection result of the controller program or the terminal device program by the above-described hardware or program.

Specifically, the CPU 33 functions as the first protocol processing unit 12, the second protocol processing unit 13, the transmitter and receiver 14, the control function unit 15, and the relay unit 16 by executing the controller program. In addition, the auxiliary storage device 32 functions as the storage 17 and the wireless communication unit 35 functions as the wireless communication unit 11 when the CPU 33 executes the controller program.

On the other hand, the CPU 33 functions as the second protocol processing unit 22, the transmitter and receiver 23, the terminal function unit 24, and the wireless controller 25 by executing the terminal device program. In addition, the auxiliary storage device 32 functions as the storage 26 and the wireless communication unit 35 functions as the wireless communication unit 21 when the CPU 33 executes the terminal device program.

In the air conditioning control system 100 according to the third embodiment configured as described above, it is possible to realize the controller 1 and the terminal device 2 by the same hardware. In addition, even in a case in which the terminal device 2 is realized by the same hardware as the controller 1, in a case in which hardware is used as the terminal device 2, it is possible to operate only a functional portion necessary for the terminal device 2. Therefore, it is possible to reduce power consumption of the terminal device 2.

In addition, although an example in which the operation of the communication device 3 is switched in a device unit of the controller 1 or the terminal device 2 is described in the above description, the unit for switching the operation of the communication device 3 may be a unit of each functional unit.

For example, a functional unit (for example, the second protocol processing unit 13 and the second protocol processing unit 22) that is able to be realized by the same program in the controller 1 and the terminal device 2 may execute the same program and may switch a program that executes only a functional unit (for example, the control function unit 15 and the terminal function unit 24) that is not able to be realized by the same program. In addition, a program realizing an unnecessary functional unit as the controller 1 or the terminal device 2 may not be executed.

In addition, the change of the operation of the communication device 3 may be performed for each function of each functional unit. For example, in a case in which the communication device 3 is operated as the terminal device 2, only a program that realizes a mesh transmission function of the first protocol processing unit 12 may not be executed or only a program that realizes a mesh configuration function may not be executed. In addition, a process load of the communication device 3 functioning as the terminal device 2 may be reduced by changing the setting of the process performed by each functional unit. For example, in a case in which the communication device 3 is operated as the terminal device 2, the setting may be changed to a setting that limits the number of times the packets are relayed by the mesh transmission function and the setting may be changed to a setting so that a mesh configuration configured by a mesh configuration function does not become a full mesh.

### [Fourth embodiment]

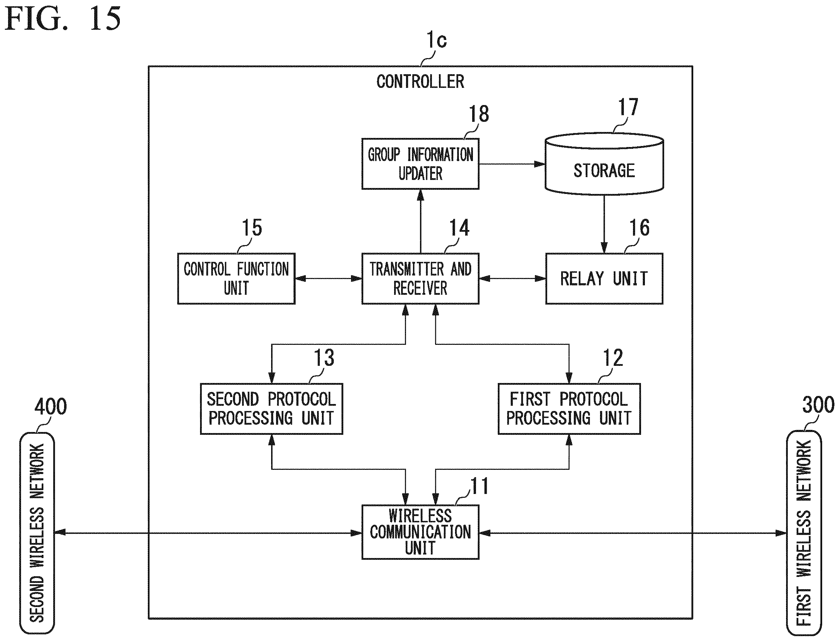

Fig. 15 is a diagram illustrating a specific example of a functional configuration of a controller 1c according to the fourth embodiment. The controller 1c of the fourth embodiment is different from the controller 1 of the first embodiment in a point that the controller 1c further includes a group information updater 18.

The group information updater 18 updates group information of its own device. Specifically, the group information updater 18 receives an input of update information indicating update content of the group information and updates the group information of its own device with the input update information. The update information may be input from an input device connected to the device and may be transmitted from other device via a network. In addition, the group information updater 18 transmits the update information input to its own device to the other controller 1.

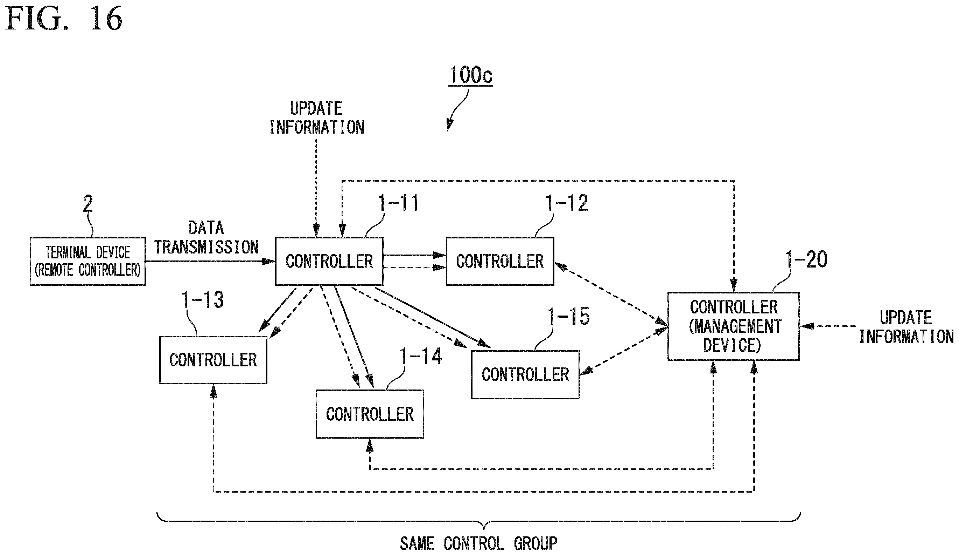

Fig. 16 is a diagram schematically illustrating a configuration of the air conditioning control system 100 according to the fourth embodiment. Fig. 16 shows an example in which a controller 1-11 transmits data transmitted from the terminal device 2 to other controllers 1-12 to 1-15 belonging to the same group on the basis of the group information. In this case, in a case in which the update information is input to the controller 1-11, the group information updater 18 of the controller 1-11 refers to the group information after updating and transmits the update information to the controllers 1-12 to 1-15 and a controller 1-20 belonging to the same control group as its own device.

Here, the controller 1-20 is the controller 1 newly added by the update information. The controller 1-11 transmits the update information to the controller 1 of the same group, and thus it is also possible to expand the group information to the newly added controller 1-20.

In addition, in Fig. 16, one of the controllers 1 may function as a management device that manages the group information (group management device). For example, in a case in which the controller 1-20 functions as the management device, the management device may transmit the group information to the other controller 1 and each controller 1 may acquire the latest group information from the management device.

With such a configuration, in the air conditioning control system 100 according to the fourth embodiment, since the update operation of the group information may be performed with respect to any one of the controllers 1, it is possible to reduce effort for updating the group information.

According to at least one embodiment described above, the controller 1 that transmits the reception packet to other communication device on the basis of a predetermined condition and the terminal device 2 that transmits the transmission packet so that the transmission packet is received by at least one communication device 1 among the plurality of communication devices 1 are provided. Therefore, it is possible to wirelessly configure the device control network of the air conditioning control system with both high reliability and low power consumption.

While several embodiments of the present invention have been described, these embodiments are presented as examples, and are not intended to limit the scope of the invention. These embodiments can be implemented in various other forms, and various omissions, replacements, and modifications can be made in a range not departing from the gist of the invention. These embodiments and modifications thereof are included in the invention described in the claims and equivalents thereof as well as in the scope and the gist of the invention.

## Claims

1. A control system comprising:
a plurality of communication devices capable of wirelessly communicating with each other via a plurality of communication paths; and
a terminal device wirelessly communicating with the plurality of communication devices,
wherein the communication device comprises:
a communication unit configured to transmit and receive a packet by wireless communication with the terminal device and other communication device; and
a relay unit configured to relay the packet received via the communication unit to the other communication device on the basis of a predetermined condition, wherein the terminal device comprises:
a terminal communication unit configured to transmit and receive the packet by the wireless communication with the plurality of communication devices,
wherein the terminal communication unit transmits the packet so that the packet is directly received by at least one communication device among the plurality of communication devices.

2. The control system of claim 1, wherein
the plurality of communication devices configure a mesh network and each of the communication devices is able to communicate with the other communication device via the plurality of communication paths by communicating with the other communication device via the mesh network.

3. The control system of claim 1, wherein
the relay unit transmits a reception packet of which a destination is its own device among reception packets directly received from the terminal device to the other communication device belonging to the same group as its own device.

4. The control system of claim 1, wherein
the relay unit relays a reception packet of which a destination is not its own device among reception packets directly received from the terminal device to the other communication device.

5. The control system of claim 4, wherein
the relay unit relays the reception packet of which the destination is not its own device among the reception packets directly received from the terminal device to the communication device belonging to a group corresponding to the terminal device.

6. The control system of claim 4, wherein the relay unit relays the reception packet of which the destination is not its own device among the reception packets directly received from the terminal device to all of the plurality of communication devices.

7. The control system of claim 4, wherein
when the relay unit relays a first packet to the other communication device, in a case in which the first packet is the same as a previously transmitted second packet and the number of times the first packet is relayed is greater than the number of times the second packet is relayed, the relay unit does not relay the first packet and discards the first packet.

8. The control system of claim 1, wherein
in a case in which the terminal device of a destination is not able to directly transmit a transmission packet of its own device, the relay unit transmits the transmission packet to the other communication device capable of directly transmitting the packet to the terminal device.

9. The control system of claim 1, wherein
when the communication unit and the terminal communication unit receive a first packet, in a case in which the first packet is the same as a previously received second packet, the communication unit and the terminal communication unit discard the first packet.

10. The control system of claim 1, wherein
the communication unit further comprises:
a wireless output unit configured to output a wireless signal in the same frequency band in the communication with the other communication device and the communication with the terminal device;
a first protocol processing unit configured to perform a process related to a communication protocol for communicating with the other communication device; and
a second protocol processing unit configured to perform a process related to a communication protocol for communicating with the terminal device.

11. The control system of claim 10, wherein
the terminal device comprises the communication unit as the terminal communication unit, and
the terminal communication unit operates in a state in which the first protocol processing unit is invalidated.

12. The control system of claim 11, wherein
the terminal device further comprises an operation mode setting unit configured to set the terminal communication unit so that the terminal communication unit operates in any mode of a first mode in which the first protocol processing unit and the second protocol processing unit operate and a second mode in which only the second protocol processing unit operates.

13. The control system of claim 1, wherein
the terminal device further comprises a wireless controller configured to control a strength of radio waves output from the terminal communication unit so that the radio waves output from the terminal communication unit are received by at least two communication devices among the plurality of communication devices.

14. The control system of claim 13, wherein
the wireless controller controls the strength of the radio waves so that the strength of the radio waves output from the terminal communication unit is a setting strength on the basis of the setting strength which is a signal strength enabling the radio waves output from the terminal communication unit to be received by at least two communication devices among the plurality of communication devices and which is a signal strength set in a device in advance.

15. The control system of claim 14, wherein
the wireless controller gradually reduces a wireless strength of the wireless controller from the setting strength within a range where the radio waves are received by at least two communication devices among the plurality of communication devices.

16. The control system of claim 14, wherein
the terminal device further comprises an input unit configured to receive an input of the setting strength.

17. The control system of claim 1, wherein
the communication device further comprises:
a storage configured to store group information indicating a correspondence between the group and the plurality of communication devices; and
a group information updater configured to transmit update information indicating update content of the group information to the other communication device and update group information of its own device on the basis of update information transmitted from the other communication device.

18. The control system of claim 1, wherein
at least one communication device among the plurality of communication devices functions as a group management device that stores group information indicating a correspondence between the group and the plurality of communication devices, and
the communication device other than the group management device acquires the group information from the group management device.

19. The control system of claim 18, wherein
the communication device further comprises a group information updater configured to transmit update information indicating update content of the group information to the group management device and update group information of its own device on the basis of update information transmitted from the group management device.

20. The control system of claim 1, wherein
the communication unit uses radio waves having a frequency less than 1 gigahertz in a wireless communication with the other communication device and the terminal device.

21. A communication method performed by a control system comprising a plurality of communication devices capable of wirelessly communicating with each other via a plurality of communication paths and a terminal device wirelessly communicating with the plurality of communication devices, the communication method comprising:
by the communication device:
a communication step of transmitting and receiving a packet by wireless communication with the terminal device and other communication device; and
a relay step of relaying the packet received in the communication step to the other communication device on the basis of a predetermined condition, and
by the terminal device:
a terminal communication step of transmitting and receiving the packet by the wireless communication with the plurality of communication devices, wherein
in the terminal communication step, the packet is transmitted so that the packet is directly received by at least one communication device among the plurality of communication devices.

22. A communication device capable of wirelessly communicating with other communication deice via a plurality of communication paths, the communication device comprising:
a communication unit configured to transmit and receive a packet by wireless communication with the other communication device and a terminal device capable of wirelessly communicating with the other communication device; and
a relay unit configured to relay the packet received via the communication unit to the other communication device on the basis of a predetermined condition.

23. A terminal device comprising a terminal communication unit configured to transmit and receive a packet by wireless communication with a plurality of communication devices capable of wireless communicating with each other via a plurality of communication paths,
wherein the terminal communication unit transmits the packet data so that the packet data is received by at least one communication device among the plurality of communication devices.
